# EUROPÄISCHE PATENTSCHRIFT

(11) **EP 1 687 680 B1**
(45) Veröffentlichungstag und Bekanntmachung des Hinweises auf die Patenterteilung: **11.06.2008**
(21) Anmeldenummer: 04804575.1
(22) Anmeldetag: 25.11.2004
(51) Int. Cl.: G05B 19/042, G05B 19/05

(54) **VERTEILER FÜR DIE AUTOMATISIERUNG UND SPEICHERMODUL HIERFÜR**
DISTRIBUTOR SUITABLE FOR AUTOMATION AND CORRESPONDING STORAGE MODULE
REPARTITEUR POUR AUTOMATISATION ET MODULE DE STOCKAGE ASSOCIE

(30) Priorität: 26.11.2003 DE 10355790
(43) Veröffentlichungstag der Anmeldung: 09.08.2006
(73) Patentinhaber: SENSTRONIC Deutschland GmbH, 67227 Frankenthal (DE)
(72) Erfinder: KIRCHDOERFFER, Rémy, F-67110 Reichshoffen (FR)
(74) Vertreter: Sommer, Peter
(86) Internationale Anmeldenummer: PCT/EP2004/053105
(87) Internationale Veröffentlichungsnummer: WO 2005/052702

(56) Entgegenhaltungen:
- WO-A-02/08867
- DE-A1- 19 639 212
- US-A- 5 192 995
- US-A- 5 727 170

## Beschreibung

### Technisches Gebiet

Die Erfindung betrifft einen Verteiler für die Automatisierung mit einem Speichermodul hierfür. Mittels eines derartigen Verteilers werden beispielsweise Förderanlagen anhand von mittels Sensoren festgestellten Eingangssignalen, die in einer programmierbaren Steuerung verarbeitet werden und auf am Ausgang angeschlossene Aktuatoren einwirken, gesteuert.

### Stand der Technik

Im Stand der Technik ist bekannt, sogenannte "SPS", nämlich speicherprogrammierbare Steuerung, für die unterschiedlichsten Aufgaben der Automatisierung einzusetzen. Dazu werden Verteiler verwendet, die in Schaltschränken untergebracht sind. Die Schaltschränke sind so ausgeführt, dass die entsprechende Schutzklasse des gesamten Systems erreicht wird. Die Verteiler selbst sind auf ihrer Eingangsseite mit Sensoren verbunden, deren Leitungen dem Kabelschrank über weite Entfernungen zugeführt werden müssen. Auf der anderen Seite sind die Verteiler an ihren Ausgängen mit Aktuatoren verbunden, zu welchen wiederum aus dem Kabelschrank heraus Leitungen führen. Darüber hinaus benötigen die Aktuatoren eine eigenständige Energieversorgung.

Derartige Verteiler wirken mit einer im Schaltschrank befindlichen programmierbaren Zentraleinheit zusammen, die über eine Schnittstelle mit einem PC verbunden ist, wobei die Verbindungsleitung ebenfalls aus dem Schaltschrank heraus geführt werden muss. Die Programmierung der Zentraleinheit erfolgt in der Regel durch herstellerspezifische Kommunikationssoftware zwischen dem PC und der programmierbaren Steuerung.

In der WO 02/08867 A2 ist universelle Schnittstelle zur elektrischen, elektronischen und elektromechanischen Steuerung, Abfragung und Betätigung offenbart. Die universelle Eingang/Ausgang-Schnittstelle wird zur Zusammenschaltung solcher Bestandteile und Steuersysteme verwendet, die analoge oder digitale Spannungs- und/oder Stromsignale über einer große Strecke ohne Hardware- oder Software-Schalter senden oder empfangen. Es wird eine Mehrzahl von Betriebsmodusstromkreise zur Verfügung gestellt, um den digitalen und analogen Ein- und Ausgang zu bewerkstelligen.

In der DE 196 39 212 A1 ist Aktuator-Sensor-Interfacebaustein (ASI) zur seriellen Datenübertragung zwischen einer Maschinensteuerung und durch diese zu steuernde Verbraucher mit mindestens einem mit einem Speicherbaustein gekoppelten ASI-Slave-Chip, der mit der Maschinensteuerung über einen ASI-Bus verbunden ist offenbart. Den eingebauten Speicherbausteinen werden die für die Steuerung notwendigen Ansprechadressen der Sensoren bzw. Aktuatoren zugeteilt.

In der US 5,727,170 ist eine programmierbare Steuerung (PLC) mit einer vom Benutzer konfigurierbaren Protokollschnittstelle offenbart. Eine Speicherpatrone ist offenbart, die interne permanente Informationen aus einer Basiseinheit mit einer CPU abspeichern kann und ohne eine Programmiereinrichtung benutzen zu müssen, diese Informationen bereitzustellen kann. Diese Speicherpatrone kann von einer Anschlussdose an der Basiseinheit getrennt werden. An die Basiseinheit kann ein Erweiterungsmodul mittels einer Bus-Verbindung angeschlossen werden, wobei der Bus-Anschluss an der Basiseinheit und der Anschluss der Speicherpatrone unterschiedlich sind. Vorzugsweise kann die Basiseinheit an einem Schienenträger befestigt werden. Solche Schienenträger werden üblicherweise zur Befestigung in Schaltschränken verwendet.

In der DE 198 16 170 A1 ist ein Steuerungsmodul mit einem Gehäuseunterteil und einem Gehäuseoberteil offenbart, wobei in dem Gehäuse eine Schaltung vorgesehen ist. Über eine Anschlusseinrichtung kann ein Programmiergerät mit der elektronischen Schaltung verbunden werden, um diese zu programmieren oder Daten auszulesen. Zum Anschluss externer Sensoren und/oder Aktuatoren weist das Gehäuseoberteil Steckereinrichtungen auf. Das Steuermodul kann direkt im Feld montiert werden und Schutzklasse IP 67 wird durch eine entsprechende Abdichtung der betroffenen Bauteile zueinander hergestellt.

In der DE 203 14 618 U1 ist ein Feldgerät zur Bestimmung und Überwachung einer chemischen oder physikalischen Prozessgröße eines Medium offenbart, wobei der Durchführungsraum zwischen zwei Kammern mit einer Vergussmasse vergossen ist. Ein solcher Verguss ist in dem Fall erforderlich, dass mindestens eine Kammer druckdicht abgeschlossen sein muss.

In der DE 201 17 856 U1 ist ein modulares Steckverbindungssystem offenbart, wobei nach einem Ausführungsbeispiel das Innere des Gehäuses mit einer Vergussmasse ausgegossen wird. Durch das Vergießen wird eine erhöhte Zugentlastung und Vibrationsfestigkeit erreicht.

Nachteilig bei diesen bekannten Verteilern ist, dass die Sensoren und Aktuatoren mit einem zentralen Schaltschrank verbunden werden müssen. Dies gilt insbesondere dann, wenn sie in einer Umgebung betrieben werden, welche besondere Schutzvoraussetzungen erfordert, beispielsweise die Schutzvoraussetzungen nach IP67 bezüglich Staubdichtheit, Wasserdichtheit/Feuchtigkeit.

### Darstellung der Erfindung

Gemäß der Erfindung wird ein Verteiler für die Automatisierung, umfassend ein Gehäuse, einen Anschluss für die Stromversorgung, mindestens einen Eingang für einen Sensor und mindestens einen Ausgang für einen Aktuator, weiterhin umfassend eine elektronische Bauteile aufweisende Schaltung, vorgeschlagen, bei dem die Schaltung programmierbar ist und bei dem eine vorzugsweise auf der Aussenseite des Gehäuses angeordnete Schnittstelle für die Programmierung der Schaltung sowie vorzugsweise ein Erweiterungsanschluss vorgesehen ist. Dabei ist eine automatische Erkennung für ein am Erweiterungsanschluss angeschlossenes Erweiterungsmodul oder ein Speichermodul vorhanden. Das Speichermodul enthält einen elektrisch löschbaren und beschreibbaren Speicher, der in einem Gehäuseteil angeordnet ist, wobei an dem Gehäuseteil ein gegenüber dem Gehäuse abgedichteter Anschluss für die programmierbare Schaltung in dem Verteiler angebracht ist. Das abnehmbare Speichermodul enthält ein Programm. Durch Austausch des Speichermoduls kann der Verteiler von einer ersten Betriebsweise auf eine zweite Betriebsweise umgestellt werden, ohne dass der Verteiler demontiert werden muss. Es ist ausreichend, das gewünschte Speichermodul mit dem Verteiler zu verbinden. Das Speichermodul selbst weist keine eigene Stromversorgung auf und wird ausschließlich über den Verteiler gespeist. Sobald das Speichermodul an den Verteiler angeschlossen ist und vom Verteiler unter Spannung gesetzt wurde, läuft das im Speichermodul enthaltene Programm ab.

Mit diesem Verteiler ist es möglich, die Automatisierung unmittelbar am Einsatzort durchzuführen, und dabei die Eigenschaften einer "SPS" bereitzustellen. So kann beispielsweise eine Förderanlage lokal gesteuert werden. Dabei weist der Verteiler ein geringes Bauvolumen auf und ist gemäß den Anforderungen der hohen Schutzklasse IP67 ausgebildet, um selbst unter schwierigen Umgebungsbedingungen betrieben zu werden. Zum Erreichen dieser Schutzklasse ist es vorgesehen, dass die Schaltung im Gehäuse mit einem Füllmaterial vergossen ist und dass sämtliche Anschlüsse gegenüber dem Gehäuse abgedichtet sind. Auch der Speicher und die vom Anschluss in ein Gehäuseteil des Speichermoduls hineinragenden Verbindungen in dem Gehäuseteil sind vergossen. Der Speicher kann maschinenlesbare Befehle für eine programmierbare Schaltung enthalten. Darüber hinaus ist der Anschluss als Stecker ausgebildet und dieser und das Gehäuseteil sind gemäß den Anforderungen der hohen Schutzklasse IP67 abgedichtet.

Weitere Ausgestaltungen der Erfindung ergeben sich aus den Unteransprüchen.

So kann die Schaltung mindestens einen Spannungsregler für die elektrische Versorgung des an dem mindestens einen Ausgang angeschlossenen Aktuators aufweisen. Auch kann der Eingang zum Anschluss mindestens eines Sensors eine eigene Spannungsversorgung aufweisen und als Stecker zum Anschluss mehrerer Sensoren, insbesondere von zwei Sensoren, ausgebildet sein.

Vorteilhafterweise ist für jeden Ausgang (4) zum Anschluss mindestens eines Aktuators ein eigener Leistungsbegrenzer vorgesehen.

Gemäß einer vorteilhaften Weiterbildung ist der Anschluss der Stromversorgung den Anschluss von mindestens zwei unabhängigen Stromquellen ermöglicht, wobei eine Stromversorgung für den Eingang und eine andere Stromversorgung für den Ausgang vorgesehen ist.

Besonders günstig ist es, wenn die Schaltung auf einer Leiterplatte angeordnet ist und wenn die Schnittstelle und der Erweiterungsanschluss sowie der Eingang und der Ausgang als Stecker ausgebildet sind, wobei die Stecker unmittelbar an der Leiterplatte befestigt sind und vorzugsweises senkrecht dazu angeordnet sind.

Vorteilhafterweise sind die Schaltung und die Schnittstelle so ausgebildet sind, dass sie mit einer Standard-Kommunikationssoftware mit einem handelsüblichen PC mit einem handelsüblichen Betriebssystem ansprechbar ist. Die Programmierung der Schaltung kann mittels eines Konvertierungsprogramms für Textbefehle in maschinenlesbare Befehle erfolgt, wobei das Konvertierungsprogramm Bestandteil der Schaltung ist.

Es ist vorteilhaft, wenn mehrere Programme einzeln aufrufbar abgespeichert sind.

### Kurzbeschreibung der Zeichnung

In der Zeichnung ist ein Ausführungsbeispiel der Erfindung dargestellt, es zeigt die
- Fig. 1: einen erfindungsgemäßen Verteiler in perspektivischer Ansicht, die
- Fig. 2: den Verteiler aus Fig. 1 in einer Draufsicht, die
- Fig. 3: den Verteiler aus Fig. 1 und 2 in einem Querschnitt, die
- Fig. 4: ein erfindungsgemäßes Speichermodul in einer perspektivischen Ansicht und die
- Fig. 5: das Speichermodul aus Fig. 4 in einem Querschnitt

### Ausführungsbeispiel der Erfindung

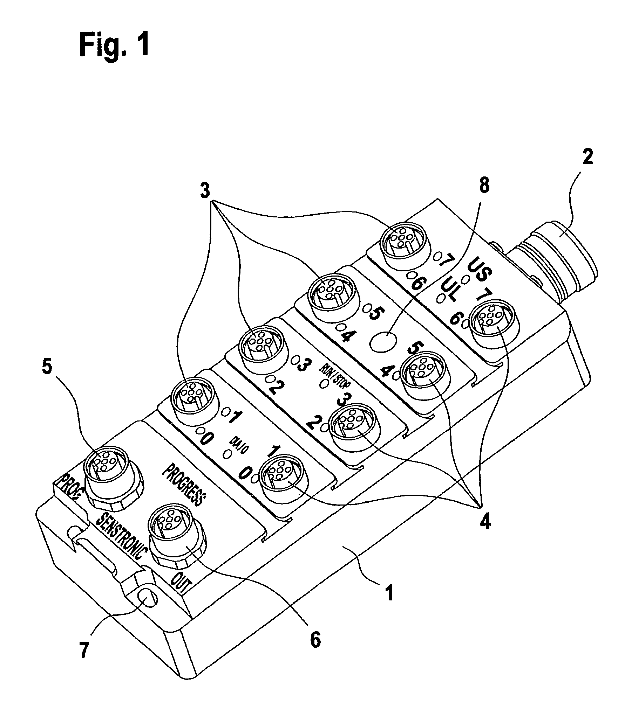

Der in Fig. 1 dargestellte Verteiler umfasst ein Gehäuse 1 mit einem Stecker 2 für eine Stromversorgung und einer ersten Reihe von Steckern 3 für den Anschluss von Sensoren sowie eine zweite Reihe von Steckern 4 für den Anschluss von Aktuatoren. Jeder der Stecker 3 für die Sensoren ist als fünfpoliger Stecker ausgebildet und stellt zwei Eingänge für Sensoren bereit. Auch jeder Stecker 4 ist fünfpolig ausgebildet und stellt zwei Ausgänge für Aktuatoren bereit.

Der Stecker 2 für die Stromversorgung ist so ausgebildet, dass die Stromversorgung der Stecker 3 und der Stecker 4 aus zwei unterschiedlichen Stromquellen erfolgen kann, die mit dem Stecker 2 verbunden werden können.

Weiterhin ist eine Schnittstelle zu der in dem Gehäuse 1 enthaltenen programmierbaren Steuerung vorhanden, welche ebenfalls als Stecker 5 ausgebildet ist. Darüber hinaus ist eine Erweiterungsanschluss 6 vorgesehen, der ebenfalls als Stecker ausgebildet ist. Um Verwechslungen zu vermeiden, kann der Erweiterungsanschluss 6 als vierpoliger Stecker ausgebildet sein, so dass ein Kabel für die Stecker 3, 4 oder 5 nicht auf den Erweiterungsanschluss 6 aufgesteckt werden kann. Dies kann selbstverständlich auch durch andere Maßnahmen bewerkstelligt werden.

Schließlich weist das Gehäuse Befestigungslöcher 7, 8 auf, durch welche Befestigungsschrauben gesteckt werden können.

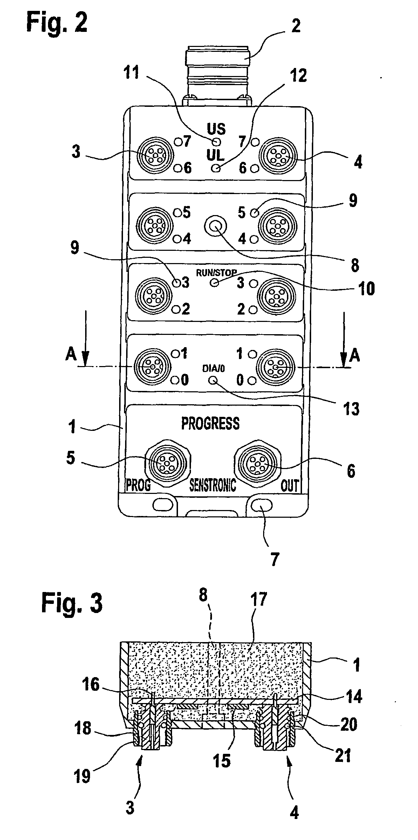

In Fig. 2 lässt sich die Anordnung der verschiedenen Stecker sowie weiterer Bauteile feststellen. Zu erkennen ist die erste Reihe von Steckern 3 für die Sensoren sowie die zweite Reihe von Steckern 4 die Aktuatoren. Neben jedem Stecker 3, 4 sind Signallampen 9 in einer Anzahl entsprechend der Eingänge bzw. Ausgänge jedes Steckers 3 bzw. 4. Darüber hinaus ist noch eine Bereitschaftsanzeige 10 für den Verteiler insgesamt vorhanden. Schließlich ist eine Signallampe 11 "US" zur Anzeige der Versorgungsspannung für die Aktuatoren und eine Signallampe 12 für die Anzeige der Versorgungsspannung für die Sensoren vorgesehen. Eine weitere Signallampe 13 zeigt eine Überlast auf der Ausgangsseite an.

Alle Signalleuchten, die vorteilhafterweise als LED ausgeführt sind, können im An/Aus-Modus betrieben werden, es kann aber auch alternativ oder zusätzlich ein Blinken oder ein Wechseln der Farbe vorgesehen sein.

Die Signallampen 9 leuchten dann, wenn der zugeordnete Ein/Ausgang aktiv ist. Ist die Verbindung unterbrochen oder der Sensor ausgefallen, so erlischt die Signallampe.

Auch die Signallampe 11, 12 zeigen das Vorhandensein der Vorsorgungsspannung für die Aktuatoren bzw. der Versorgungsspannung für die Sensoren an, wenn sie leuchten. Wenn sie aus sind, ist die Versorgungsspannung für die Aktuatoren nicht vorhanden bzw. ist die Versorgungsspannung für die Sensoren nicht in dem zulässigen Spannungsbereich.

Die Signallampe 13 zeigt an, ob auf der Ausgangsseite der über die Stecker 4 angeschlossenen Aktuatoren eine Überspannung vorliegt. In diesem Fall leuchtet die Signallampe 13 rot auf, bei ordnungsgemäßem Betrieb ist sie hingegen erloschen. Bei der Signallampe 10 handelt es sich um eine mehrfarbige Leuchte, welche in einem gelben Betriebszustand die ordnungsgemäße Funktion der programmierbaren Steuerung anzeigt. Leuchtet die Signallampe 13 rot und blinkt, so wird angezeigt, dass die programmierbare Steuerung ein Problem beim Auslesen des Programms aus dem Speicher aufweist oder dass der Benutzer das Programm abgebrochen hat, was über eine PC-Kommunikation möglich ist.

Ist die Signallampe 13 erloschen, ist der Verteiler blockiert.

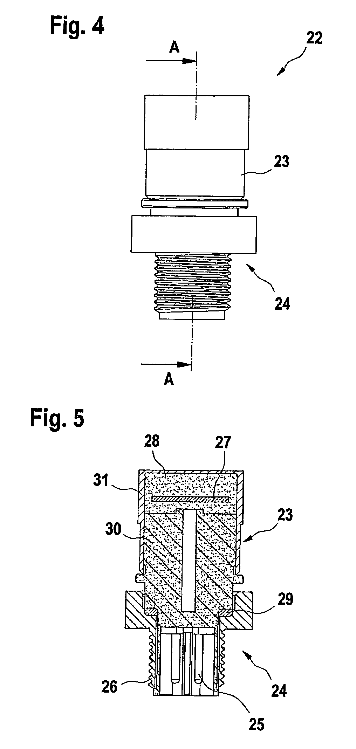

Der Verteiler enthält zunächst kein Programm, so dass es erforderlich ist, vor einer ersten Benutzung ein Programm zu laden. Dies geschieht über den Erweiterungsanschluss 6, an welchem ein in Fig. 4, 5 dargestelltes und später erläutertes Speichermodul angeschlossen wird. Wird der Verteiler aktiviert, beispielsweise durch Anschluss an eine Stromversorgung, lädt die programmierbare Schaltung das in dem Speichermodul abgelegte Programm und prüft die Integrität dieses Programms bevor das Programm von der Schaltung ausgeführt wird. Die ordnungsgemäße Funktion wird durch die Signallampe 10 angezeigt.

Zur Programmierung der im Gehäuse 1 untergebrachten Schaltung wird über den Stecker 5 eine Verbindung mit einem handelsüblichen PC hergestellt, beispielsweise über eine RS232-Schnittstelle am PC. Der Stecker 5 am Gehäuse 1 selbst ist entsprechend den Schutzvorschriften am Einsatzort des Verteilers ausgebildet, hier gemäß der Schutzklasse IP67.

Die Verbindung des PC mit der Schaltung kann unabhängig davon hergestellt werden, ob das Speichermodul an den Erweiterungsanschluss 6 angeschlossen ist oder nicht. Eine unabhängige Programmierung der Schaltung ist jedoch erst dann möglich, wenn das Speichermodul am Erweiterungsanschluss 6 angebracht ist. Dadurch wird sichergestellt, dass die programmierbare Schaltung stets auf das Speichermodul zugreift, um das Programm auszuführen. Der Ablauf der Programmierung wird später erläutert.

Aus der Schnittzeichnung gemäß Fig. 3 wird der innere Aufbau des Verteilers deutlich und insbesondere auch die Maßnahmen zur Erhaltung eines Schutzes gemäß IP67.

Auf einer Leiterplatte 14 im Innern des Gehäuses 1 ist die elektronische Bauteile aufweisende, programmierbare Schaltung 15 angeordnet. Der Eingang 3 und der Ausgang 4 sind als Stecker ausgebildet, wobei die Stecker über einen Kontakt 16 unmittelbar an der Leiterplatte 14 befestigt und senkrecht dazu angeordnet sind. Die Schaltung 15 weist mindestens einen Spannungsregler für die elektrische Versorgung des an dem mindestens einen Ausgang 4 angeschlossenen Aktuators auf.

Die Schaltung 15 ist im Gehäuse 1 mit einem elektrisch isolierenden Füllmaterial 17 vergossen, beispielsweise mit einem Kunstharz, und die Anschlüsse 3, 4 sind gegenüber dem Gehäuse 1 abgedichtet. Dazu sind die Anschlüsse 3, 4 in an sich bekannter Weise aus einem mehrteiligen Stecker mit einem Innenteil 18 zur Aufnahme von Kontakten und einem Außenteil 19 mit einem Innengewinde zur Befestigung eines nicht dargestellten Anschlusssteckers gebildet. Zwischen dem Innenteil 18 und dem Außenteil 19 ist eine Dichtung 20 angeordnet. Eine weitere Dichtung 21 dichtet einen in den Stecker 4 eingesteckten Anschlussstecker ab.

In Fig. 4 ist ein Speichermodul 22 dargestellt, welches einen Gehäuseteil 23 und einen Steckerteil 24 zum Anschluss an den Stecker 6 aus Fig. 1, 2 aufweist.

In Fig. 5 ist ein Schnitt durch das Speichermodul 22 dargestellt. Das Steckerteil 24 umfasst zum einen Steckkontakte 25 und zum anderen ein Befestigungsteil, welches hier in Form einer Schraubverbindung 26 ausgebildet ist. Das Speichermodul 22 lässt sich so auf den Erweiterungsanschluss 6 aus Fig. 2 aufstecken und mit diesem verschrauben. Der eigentliche Speicher 27 ist nach der Art eines EEPROM, d.h. er ist über die Kontakte 25 elektrisch lösch- und beschreibbar und behält seinen Inhalt ohne Stromversorgung. Weiterhin sind passive und aktive elektronische Bauteile sowie eine Leiterplatte als Träger für die elektronischen Bauelemente vorhanden, die nicht im einzelnen dargestellt sind.

Der Speicher 27 ist im Gehäuseteil 23 so angeordnet, dass er gegenüber der Umgebung entsprechend der erforderlichen Schutzklasse abgedichtet ist. Dazu kann das Gehäuseteil 23 mit einem vorzugsweise elektrisch isolierenden Füllmaterial 28 ausgegossen sein und über eine Dichtung 29 zum Befestigungsteil 24 hin verfügen.

Das Gehäuseteil kann wiederum mehrteilig sein und aus einem Grundkörper 30 und einer Kappe 31 bestehen. Der Grundkörper 30 dient zur Aufnahme eines Steckereinsatzes und als Träger für die Leiterplatte mit dem Speicher 27 und als Befestigung für das Steckerteil 24, welches wiederum über das Schraubgewinde 26, hier ausgeführt als Gewinde M12, an dem Verteiler anbringbar ist.

Im Ausführungsbeispiel sind alle Verbindungen über Stecker ausgeführt, die der Schutzart IP67 entsprechen. Im Falle der IP67 bedeutet dies, dass eine Abdichtung beispielsweise über O-Ringe bzw. andere Dichtungen und ein Verguss der elektronischen Bauteile zum Schutz vor Spritzwasser und Eindringen von Feuchtigkeit vorgesehen ist.

Für die Verbindung mit den Sensoren und den Aktuatoren werden Stecker M12 verwendet, wobei für den Erweiterungsanschluss an die Schnittstelle zur Steuerung unterschiedliche Steckerbelegungen vorgesehen sein können. Der Stecker für die Stromversorgung ist Typ M23 mit sechs Kontakten.

Für die Programmierung des Verteilers wird nach Herstellung der Verbindung über ein Standartkommunikationsprogramm mit dem PC aus vom PC an den Verteiler übertragenen Textanweisungen ein maschinenlesbares Programm erstellt, welches in dem Speichermodul abgespeichert wird.

Die Textanweisungen werden hierfür als Textdatei vollständig an den Verteiler übermittelt.

Alternativ hierzu kann die elektronische Steuerung zusätzlich zu dem Speicher für das Betriebssystem einen eigenen Programmspeicher aufweisen, in dem das Programm gespeichert ist. Darüber hinaus können Mittel vorgesehen sein, um das gespeicherte Programm in das externe Speichermodul zu übertragen, beispielsweise nach Drücken einer Taste. Darüber hinaus kann vorgesehen werden, das Programm aus dem Speichermodul erst auf Aufforderung hin auszulesen und in den eigentlichen Programmspeicher zu übertragen. Das Speichermodul kann in diesem Fall als Programmsicherung verwendet werden und vom eigentlichen Verteiler entfernt werden. Weiterhin kann im Gehäuse des Verteilers ein Schalter, Taster oder ein Stecker zum Anschluss einer Baugruppe mit Codierung angebracht werden, um z.B. nur berechtigten Personen ein Überschreiben eines in der Steuerung befindlichen Programms zu ermöglichen. Weiterhin könnte man auch Zählerstände, Laufzeiten Zyklenzähler usw. auslesen, welche von der Steuerung während des Betriebes gespeichert werden.

Darüber hinaus können im Speichermodul mehrere Programme einzeln abrufbar abgespeichert sein, die aufgrund der Struktur des im Verteiler ablaufenden Programms beispielsweise bei Betätigung eines Wahlschalters oder durch besondere Eingangszustände ein Sprung in ein Unterprogramm oder in ein verzweigtes Hauptprogramm zur Folge haben.

### Bezugszeichenliste

- 1: Gehäuse
- 2: Stecker für die Stromversorgung
- 3: Stecker für Sensoren
- 4: Stecker für Aktuatoren
- 5: Stecker für PC-Schnittstelle
- 6: Erweiterungsanschluss
- 7: Befestigungslöcher
- 8: Befestigungslöcher
- 9: Signallampen
- 10: Bereitschaftsanzeige
- 11: Signallampe
- 12: Signallampe
- 13: Signallampe
- 14: Leiterplatte
- 15: Schaltung
- 16: Kontakt
- 17: Füllmaterial
- 18: Innenteil
- 19: Außenteil
- 20: Dichtung
- 21: Dichtung
- 22: Speichermodul
- 23: Gehäuseteil
- 24: Steckerteil
- 25: Steckkontakt
- 26: Schraubverbindung
- 27: Speicher
- 28: Füllmaterial
- 29: Dichtung
- 30: Grundkörper
- 31: Kappe

## Patentansprüche

1. Verteiler für die Automatisierung, umfassend ein Gehäuse (1), einen Anschluss (2) für die Stromversorgung, mindestens einen Eingang (3) für einen Sensor und mindestens einen Ausgang (4) für einen Aktuator, weiterhin umfassend eine elektronische Bauteile aufweisende Schaltung (15), welche über eine Schnittstelle (5) programmierbar ist, sowie ein Erweiterungsanschluss (6) und ein externes Speichermodul (22), auf das die Schaltung (15) zugreifen kann, **dadurch gekennzeichnet, dass** eine automatische Erkennung für ein am Erweiterungsanschluss (6) angeschlossenes Erweiterungsmodul oder Speichermodul (14) vorhanden ist, wobei die Schaltung (15) im Gehäuse (1) mit einem Füllmaterial (17) vergossen ist und sämtliche Anschlüsse (2-6) gegenüber dem Gehäuse abgedichtet sind, wobei das Speichermodul (22) einen elektrisch löschbaren und beschreibbaren Speicher (27) aufweist, der in einem Gehäuseteil (23) angeordnet ist, wobei an dem Gehäuseteil (23) ein Anschluss (24) angebracht ist, wobei der Speicher (27) und die vom Anschluss (24) in das Gehäuseteil (23) hineinragenden Verbindungen (25) in dem Gehäuseteil (23) mit einem Füllmaterial (28) vergossen sind, wobei der Speicher (27) ein Programm für die programmierbare Schaltung (15) enthält, wobei der Anschluss (24) als Stecker ausgebildet ist und dieser und das Gehäuseteil (23) abgedichtet sind.

2. Verteiler nach Anspruch 1, **dadurch gekennzeichnet, dass** die Programmierung der Schaltung (15) mittels eines Konvertierungsprogramms, welches die Textbefehle aus dem Programm in maschinenlesbare Befehle konvertiert, wobei das Konvertierungsprogramm Bestandteil der Schaltung (15) ist.

3. Verteiler nach Anspruch 1, **dadurch gekennzeichnet, dass** das Programm maschinenlesbare Befehle für die programmierbare Schaltung (15) enthält.

4. Verteiler nach einem der Ansprüche 1 bis 3, **dadurch gekennzeichnet, dass** die Schaltung mindestens einen Spannungsregler für die elektrische Versorgung des an dem mindestens einen Ausgang (4) angeschlossenen Aktuators aufweist.

5. Verteiler nach einem der Ansprüche 1 bis 4, **dadurch gekennzeichnet, dass** der Eingang (3) zum Anschluss mindestens eines Sensors eine eigene Spannungsversorgung aufweist.

6. Verteiler nach einem der Ansprüche 1 bis 5, **dadurch gekennzeichnet, dass** der Eingang (3) als Stecker zum Anschluss mehrerer Sensoren, insbesondere von zwei Sensoren, ausgebildet ist.

7. Verteiler nach einem der Ansprüche 1 bis 6, **dadurch gekennzeichnet, dass** für jeden Ausgang (4) zum Anschluss mindestens eines Aktuators ein eigener Leistungsbegrenzer vorgesehen ist.

8. Verteiler nach einem der Ansprüche 1 bis 7, **dadurch gekennzeichnet, dass** der Anschluss (2) der Stromversorgung den Anschluss von mindestens zwei unabhängigen Stromquellen ermöglicht, wobei eine Stromversorgung für den Eingang und eine andere Stromversorgung für den Ausgang vorgesehen ist.

9. Verteiler nach einem der Ansprüche 1 bis 8, **dadurch gekennzeichnet, dass** die Schaltung (15) auf einer Leiterplatte (14) angeordnet ist und dass die Schnittstelle (5) und der Erweiterungsanschluss (6) sowie der Eingang (3) und der Ausgang (4) als Stecker ausgebildet sind, wobei die Stecker unmittelbar an der Leiterplatte (14) befestigt sind und vorzugsweise senkrecht dazu angeordnet sind.

10. Verteiler nach einem der Ansprüche 1 bis 9, **dadurch gekennzeichnet, dass** die Schaltung (15) und die Schnittstelle (5) so ausgebildet sind, dass sie mit einer Standard-Kommunikationssoftware mit einem PC ansprechbar ist.

11. Verteiler nach einem der Ansprüche 1 bis 10, **dadurch gekennzeichnet, dass** mehrere Programme einzeln aufrufbar abgespeichert sind.

## Claims

1. A distributing device for automation systems, comprising a casing (1), a connector (2) for power supply, at least one input (3) for a sensor and at least one output (4) for an actuator, further comprising a circuit (15) which includes electronic components and can be programmed via a computer interface (5), and an extension connector (6) and an external memory module (22) which can be accessed by said circuit (15), **characterized in that** automatic recognition means for an extension module or memory module (14) connected to said extension connector (6) are present, said circuit (15) in said casing (1) being embedded in casting material (17) and all of the connectors (2-6) are sealed off from said casing, and the memory module (22) comprises an electrically erasable and writable memory (27) disposed in a housing part (23), and a connector (24) is attached to said housing part (23) and said memory (27) and the leads (25) projecting from said connector (24) into the interior of said housing part (23) are embedded in casting material (28) in said housing part (23), which memory (27) contains a program for the programmable circuit (15), and said connector (24) is in the form of a plug and this plug and the housing part (23) are sealed.

2. The distributing device according to claim 1, **characterized in that** programming of said circuit (15) is effected by means of a conversion program that converts the text commands in said program into computer-readable commands, which conversion program is included in said circuit (15).

3. The distributing device according to claim 1, **characterized in that** said program includes computer-readable commands for said programmable circuit (15).

4. The distributing device according to any one of claims 1 to 3, **characterized in that** said circuit has at least one voltage regulator for the electrical power supply to the actuator connected to at least one output (4).

5. The distributing device according to any one of claims 1 to 4, **characterized in that** said input (3) has a separate power supply for connecting at least one sensor.

6. The distributing device according to any one of claims 1 to 5, **characterized in that** said input (3) is in the form of a plug allowing for the connection of a plurality of sensors, in particular two sensors.

7. The distributing device according to any one of claims 1 to 6, **characterized in that** each output (4) is provided with a separate power limiter for the connection of at least one actuator.

8. The distributing device according to any one of claims 1 to 7, **characterized in that** said connector (2) for the power supply allows for the connection of at least two independent power sources, one power supply being provided for the input and another for the output.

9. The distributing device according to any one of claims 1 to 8, **characterized in that** said circuit (15) is disposed on a printed board (14) and that said computer interface (5) and said extension connector (6) and said input (3) and output (4) are formed as a plugs, which are mounted directly on the printed board (14), preferably perpendicularly thereto.

10. The distributing device according to any one of claims 1 to 9, **characterized in that** said circuit (15) and said computer interface (5) are such that they are responsive to standard communication software via a PC.

11. The distributing device according to any one of claims 1 to 10, **characterized in that** a plurality of programs are stored such that they can be individually addressed.

## Revendications

1. Tableau de distribution pour l'automatisation, comprenant un boîtier (1), un connecteur (2) pour l'alimentation électrique, au moins une entrée (3) pour un capteur et au moins une sortie (4) pour un actionneur, comprenant en outre un circuit (15) présentant des composants électroniques et étant programmable par une interface (5), ainsi qu'un connecteur d'extension (6) et un module de mémoire externe (22) auquel le circuit (15) peut accéder, **caractérisé en ce qu'il** existe une reconnaissance automatique pour un module d'extension connecté au connecteur d'extension (6) ou pour un module de mémoire (14), dans lequel le circuit (15) est scellé dans le boîtier (1) avec une matière de remplissage (17) et tous les connecteurs (2 à 6) sont rendus étanches par rapport au boîtier, dans lequel le module de mémoire (22) présente une mémoire (27) inscriptible et effaçable électriquement qui est disposée dans une partie de boîtier (23), un connecteur (24) étant installé sur la partie de boîtier (23), dans lequel la mémoire (27) et les connexions (25) dépassant depuis le connecteur (24) dans la partie de boîtier (23) est scellée avec une matière de remplissage (28) dans la partie de boîtier (23), dans lequel la mémoire (27) contient un programme pour le circuit programmable (15), dans lequel le connecteur (24) est réalisé comme une prise, et celle-ci et la partie de boîtier (23) sont rendues étanches.

2. Tableau de distribution selon la revendication 1, **caractérisé en ce que** la programmation du circuit (15) s'effectue au moyen d'un programme de conversion qui convertit les instructions texte provenant du programme en instructions lisibles par machine, dans lequel le programme de conversion fait partie du circuit (15).

3. Tableau de distribution selon la revendication 1, **caractérisé en ce que** le programme contient des instructions lisibles par machine pour le circuit programmable (15).

4. Tableau de distribution selon l'une quelconque des revendications 1 à 3, **caractérisé en ce que** le circuit présente au moins un régulateur de tension pour l'alimentation électrique de l'actionneur connecté à ladite au moins une sortie (4).

5. Tableau de distribution selon l'une quelconque des revendications 1 à 4, **caractérisé en ce que** l'entrée (3) présente une alimentation en tension spécifique pour la connexion d'au moins un capteur.

6. Tableau de distribution selon l'une quelconque des revendications 1 à 5, **caractérisé en ce que** l'entrée (3) est réalisée comme une prise pour connecter plusieurs capteurs, en particulier deux capteurs.

7. Tableau de distribution selon l'une quelconque des revendications 1 à 6, **caractérisé en ce que** pour chaque sortie (4), un limiteur de puissance spécifique est prévu pour connecter au moins un actionneur.

8. Tableau de distribution selon l'une quelconque des revendications 1 à 7, **caractérisé en ce que** le connecteur (2) de l'alimentation électrique permet la connexion d'au moins deux sources électriques indépendantes, dans lequel une alimentation électrique est prévue pour l'entrée et une autre alimentation électrique est prévue pour la sortie.

9. Tableau de distribution selon l'une quelconque des revendications 1 à 8, **caractérisé en ce que** le circuit (15) est disposé sur une carte de circuits imprimés (14) et **en ce que** l'interface (5) et le connecteur d'extension (6) ainsi que l'entrée (3) et la sortie (4) sont réalisés comme des prises, dans lequel les prises sont fixées directement à la carte de circuits imprimés (14) et sont disposées de préférence perpendiculairement à celle-ci.

10. Tableau de distribution selon l'une quelconque des revendications 1 à 9, **caractérisé en ce que** le circuit (15) et l'interface (5) sont réalisés de telle sorte qu'ils peuvent être activés par un PC à l'aide d'un logiciel de communication standard.

11. Tableau de distribution selon l'une quelconque des revendications 1 à 10, **caractérisé en ce que** plusieurs programmes sont enregistrés de façon individuellement adressable.
